# EUROPEAN PATENT APPLICATION

(11) **EP 2 873 905 A2**
(43) Date of publication of application: **20.05.2015**
(21) Application number: 13460080.8
(22) Date of filing: 13.12.2013
(51) Int. Cl.: F16M 11/10, F16M 11/18, F16M 11/20

(54) **Head of vision camera**

(30) Priority: 14.11.2013 PL 40606713
(71) Applicant: Przemyslowy Instytut Automatyki i Pomiarow PIAP, 02-486 Warszawa (PL)
(72) Inventor: Krakówka, Tomasz, 03-082 Warszawa (PL); Kozak, Mariusz, 05-506 W?adys?awów (PL)

(57) **Abstract**

Head of vision camera is dedicated for mobile devices, especially for small mobile devices combined from base provided with an electrical interface for connecting with the control unit and rotationally connected to it body, to which is connected to a video unit equipped with at least one vision camera and area array illuminators, is characterized by located in the body (2) horizontal drive motor (6) and the drive motor, perpendicular to horizontal axis (6) and to vertical axis (7), moreover inside of drive motor rotors (12, 12') of horizontal axis (6) and of vertical axis (7) is located electric rotary connector (13, 13') for connecting to vision cameras situated in the vision module (3) and axis (6,7) bush (9, 10) bearing (14, 14') and position sensor (16,16') discs (15, 15').

## Description

The object of invention is to head of vision camera dedicated for mobile devices, particularly for small mobile devices.

Mobile devices operated in area, controlled from a remote operator station must be equipped with a vision camera, observing landform, especially existing obstacles. Recognizing the landform gives operator possibility to control device in such way to avoid collisions with obstacles and damage or destruction of device. Mobile devices should work in both day and night time conditions. For this reason, the heads should be equipped with area array illuminators, which enables the observation by cameras both in day and night time conditions.

From United States Patent No. U.S. 6 356 308 B1 is Known a mechanism for positioning camera, mounted on the device. The positioning mechanism mounted rotationally by mounting, around a horizontal axis. The mounting is rotationally connected to the base and rotates around a vertical axis. Rotation of camera around the horizontal and vertical axis is performed through the first and second ignition coil, each coil consist pair of magnets, and at least one coil to which current is connected. The amplitude and direction of current connected to the coil determines the speed and direction of camera rotation.

From United States Patent No. U.S. 2008278578 is known mechanism, equipped with a vision camera, provided with body which has located inside first worm drive set rotating around horizontal axis and second worm drive assembly for generating rotation movement around vertical axis.

Mechanisms mentioned above and mechanisms existing on the market have large dimensions, which makes them less suitable for mobile devices with small dimensions.

The aim of the invention is therefore small dimensions head of vision camera with suitable for use in small mobile devices.

Head of vision camera is dedicated for mobile devices, especially for small mobile devices combined from base provided with an electrical interface for connecting with the control unit and rotationally connected to it body, to which is connected to a video unit equipped with at least one vision camera and area array illuminators, with located in the body horizontal drive motor and the drive motor, perpendicular to horizontal axis and to vertical axis, moreover inside of drive motor rotors of horizontal axis and of vertical axis is located electric rotary connector for connecting to vision cameras situated in the vision module and axis bush bearing and position sensor discs.

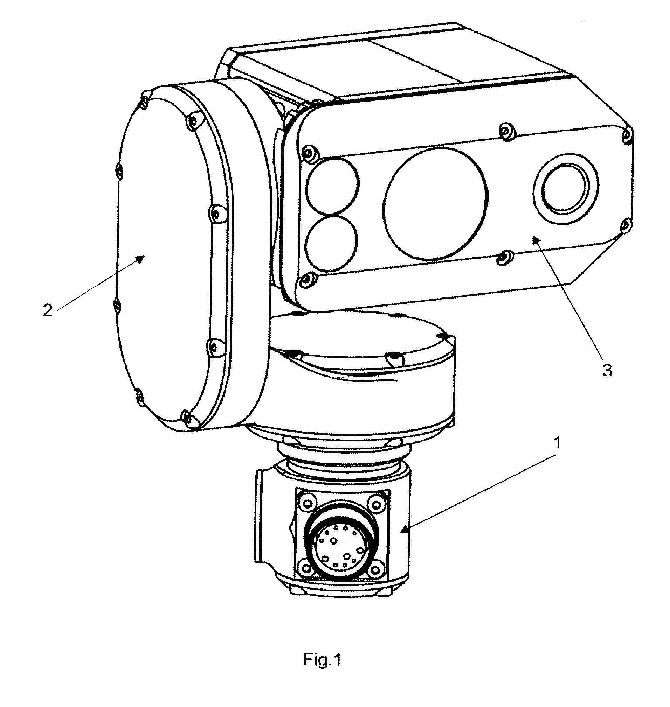

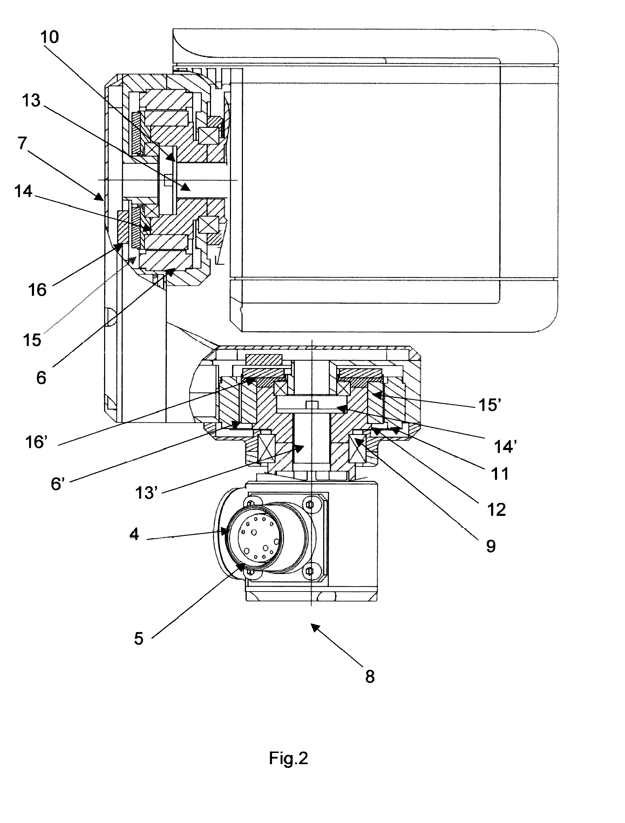

The invention is illustrated on fallowing pictures, in which Figure 1 shows the head in a perspective view, and Figure 2 - a longitudinal view

Camera head consists of a head base 1, head body 2 and observation unit 3. Head base 1 is provided with a mechanical interface 4 for head attachment 2 to the device. The head base 1 is also provided with an electric socket 5 for connecting the head 2 with the control device. In head body 2 is positioned drive motor 6 of horizontal axis 7 and the drive motor 6' of horizontal axis 8 of the head. Head base 1 is mounted to body by bush 9 of vertical axis. In upper part of the body 2 to bush 10 of horizontal axis 7 is mounted observation module 3. Observation module 3 is equipped with a camera or cameras, for instance, camera designed to day and night observation, infrared camera and area array illuminators. Camera head 2 is provided with twin drive motors 6,6' for horizontal axis 7 and a vertical axis 8, where each of the engines 6,6' consists of a stator 10,11 of a large outer diameter and the rotor 12. In rotor slot 12 is arranged rotary electrical connector 13,13' and bearings 14,14' supporting bushes 9,10 and position sensor 16,16' discs 15,15' by such arrangement of mentioned above elements, head according to the invention is characterized by small size, making it suitable for small mobile devices

## Claims

1. Head of vision camera is dedicated for mobile devices, especially for small mobile devices combined from base provided with an electrical interface for connecting with the control unit and rotationally connected to it body, to which is connected to a video unit equipped with at least one vision camera and area array illuminators, is **characterized by** located in the body (2) horizontal drive motor (6) and the drive motor, perpendicular to horizontal axis (6) and to vertical axis (7), moreover inside of drive motor rotors (12, 12') of horizontal axis (6) and of vertical axis (7) is located electric rotary connector (13, 13') for connecting to vision cameras situated in the vision module (3) and axis (6,7) bush (9, 10) bearing (14, 14') and position sensor (16,16') discs (15, 15').
